(19) Europäisches Patentamt
European Patent Office
Office européen des brevets

(11) EP 0 915 589 A1

(12) DEMANDE DE BREVET EUROPEEN

(43) Date de publication:
12.05.1999 Bulletin 1999/19

(51) Int Cl.⁶: H04L 9/22

(21) Numéro de dépôt: 98401111.4

(22) Date de dépôt: 07.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 06.11.1997 FR 9713953

(71) Demandeur: SAGEM SA
75116 Paris (FR)

(72) Inventeur: Chabanne, Hervé
78200 Mantes La Jolie (FR)

(74) Mandataire: Bloch, Gérard
2, square de l'Avenue du Bois
75116 Paris (FR)

(54) Procédé de chiffrement

(57) L'invention a pour objet un procédé de chiffrement de données claires, dans lequel,

- dans un système à base $2^p$,
- on découpe les données en une suite de blocs de p bits,
- on considère une fonction de chiffrement d'une pluralité q de paramètres constitués de générateurs mwc et on en détermine une séquence pseudoaléatoire de valeurs itératives de p bits et

- on soumet deux à deux les blocs de données de ladite suite et les valeurs de chiffrement de ladite séquence à l'une des opérations du groupe comprenant l'opération logique $\oplus$ et les opérations arithmétiques + et -.

## Description

La présente invention concerne un procédé de chiffrement, c'est-à-dire un chiffreur, dont l'originalité première est d'utiliser des éléments générateurs pseudoaléatoires mwc.

On fait appel, dans certains domaines statistiques, aux générateurs pseudoaléatoires de multiplication par retenue (multiplication with carry) à l'aide donc d'une suite de ces éléments mwc qu'on déduit les uns des autres de la manière qui va être présentée ci-après.

Un élément mwc s'écrit

$$mwc = (a, b, c)$$

relation dans laquelle

a est un multiplicateur constant,
b est un reste,
c est une retenue.

D'un élément de rang r, on tire l'élément de rang (r + 1) comme suit :
Soit une base $B = 2^\beta$

$$a\, b^r + c^r = c^{r+1}\, 2^\beta + b^{r+1}$$

$$mwc^{r+1} = (a, b^{r+1}, c^{r+1})$$

En d'autres termes, dans un système à base $2^\beta$, l'élément mwc de rang (r+1) a pour reste, le nombre de poids le plus faible et, pour retenue, le nombre de poids le plus fort du nombre représentant l'élément de rang r dans le système.

### Exemple en base 10

Soit, comme élément initial $mwc^0$, l'élément
(6, 4, 4),
avec

$$a = 6,\ b^0 = 4,\ c^0 = 4$$

$$mwc^0 = 28\ (6 \times 4 + 4)$$

$$= 2 \times 10 + 8$$

$mwc^1$ s'écrit donc
(6, 8, 2)
avec

$$a = 6,\ b^1 = 8,\ c^1 = 2$$

$$mwc^1 = 50\ (6 \times 8 + 2)$$

$$= 5 \times 10 + 0$$

mwc$^2$ s'écrit donc

(6, 0, 5)

avec

$$a = 6, b^2 = 0, c^2 = 5$$

$$mwc^2 = 5 (6 \times 0 + 5)$$

$$= 0 \times 10 + 5$$

mwc$^3$ s'écrit donc

(6, 5, 0)

avec

$$a = 6, b^3 = 5, c^3 = 0$$

et ainsi de suite.

Dans un système à base $2^{16}$, $c^{r+1}$ et $b^{r+1}$ sont égaux respectivement aux 16 bits de poids fort et au 16 bits de poids faible de $ab^r + c^r$.

O

O  O

Ayant présenté les générateurs mwc et leur avance, l'invention peut maintenant être introduite.

L'invention concerne un procédé de chiffrement de données claires, dans lequel,

- dans un système à base $2^p$,
- on découpe les données en une suite de blocs de p bits,
- on considère une fonction de chiffrement d'une pluralité q de paramètres constitués de générateurs mwc et on en détermine une séquence pseudoaléatoire de valeurs itératives de p bits et
- on soumet deux à deux les blocs de données de ladite suite et les valeurs de chiffrement de ladite séquence à l'une des opérations du groupe comprenant l'opération logique $\oplus$ et les opérations arithmétiques + et -.

Avantageusement, dans la fonction de chiffrement, les générateurs mwc sont respectivement introduits alternativement par l'opération $\oplus$ et l'opération +.

De préférence, les indices des générateurs mwc de la fonction de chiffrement constituent une suite pseudoaléatoire de g indices (g < q) ou une suite déterminée de q indices.

De préférence encore, lesdits générateurs mwc constituent une combinaison non linéaire.

O

O  O

L'invention sera mieux comprise à l'aide de la description suivante d'une étape d'itération de la mise en oeuvre préférée du chiffreur.

Le chiffrement qui va maintenant être décrit comporte un certain nombre d'étapes, ou d'itérations, comme celle qui est exposée ci-dessous et qui se déroule après avance, à l'instant $(to + n \Delta t)$ d'une pluralité de huit éléments $mwc^n_0$.... $mwc^n_7$ ici de 16 bits chacun. Ce chiffrement s'effectue à l'aide de 8 registres 32 bits en tant que générateurs mwc et d'un microprocesseur 16 bits.

1.- Itération du chiffreur

Soit à cet instant, c'est-à-dire à l'étape n (n = 0,1...), un **leader** de 16 bits, dont la détermination apparaîtra plus loin

Ilea$_{15}$ lea$_{14}$ lea$_{13}$ ........... lea$_1$ lea$_0$I

On considère comme terme **newlea** l'élément générateur mwc de l'instant considéré, c'est-à-dire de l'étape considérée, et d'un premier indice combinatoire égal à une combinaison de bits particuliers du **leader,** ou le complément bit à bit de cet élément, selon qu'un des bits du **leader** est égal à 0 ou 1.

Soit le terme **ind** égal à une autre combinaison d'autres bits particuliers du **leader** et considérons l'élément mwc d'un deuxième indice combinatoire égal à une autre combinaison de bits particuliers du **leader** et une suite d'un nombre donné d'éléments mwc d'indices respectifs suivant l'indice combinatoire.

Soit le terme **cmb** égal à une fonction d'éléments de la suite d'éléments selon les valeurs de quelques (deux) autres bits particuliers du **leader**.

2.- Sortie du chiffreur.

Soit une mémoire fifo (premier entré, premier sorti) à deux éléments.

A l'instant (to + n Δ t) considéré, et selon la valeur d'un autre bit encore du **leader**, la sortie de la fifo est égale

-   au mot du premier élément, le mot du second élément devenant celui du premier et le terme **cmb** devenant celui du second élément ou

-   au terme **cmb**

En d'autres termes, à l'étape n, la sortie S$^n$ du chiffreur est le mot du premier élément de la fifo ou la valeur itérative cmb déterminée.

3.- Chiffrement et déchiffrement

Les données à chiffrer sont représentées par une suite a$_i$ (i = 0, ...) de blocs, ici de 16 bits.

A chaque étape i, le bloc a$_i$ est "XORé" (soumis à l'opération XOR, à l'opération de "XORage") avec la sortie S$^i$ du chiffreur pour former un bloc chiffré ici de 16 bits b$_i$.

Pour déchiffrer un bloc b$_i$, il faut aussi le XORer avec la sortie correspondante S$^i$ du chiffreur.

XORer deux blocs de bits, selon le symbole ⊕, consiste à les entrer bit à bit dans une porte "OU exclusif", selon le tableau de vérité suivant

| Si / bi | 0 | 1 |
|---|---|---|
| 0 | 0 | 1 |
| 1 | 1 | 0 |

4.- Avance du chiffreur

Après avoir chiffré le bloc a$_n$ des données, on avance d'un rang sept des huit éléments mwc, l'élément d'un troisième indice combinatoire égal à une combinaison encore différente de bits particuliers du **leader** de l'étape (n) étant avancé de deux rangs.

Quant à l'élément mwc d'un quatrième indice combinatoire égal à une combinaison ici toujours distincte de bits particuliers du **leader**, avant l'avance, on en modifie le reste b' et la retenue c' comme suit :

$$c' = a - 1 - c \ (+ \text{ éventuellement } 2^{16} \text{ si } < 0)$$

$$b' = 2^{16} - 1 - b$$

Pour l'étape (n + 2), **newlea** devient le terme **leader**.

5.- Initialisation du chiffreur

5.1.- Initialisation par une clé de 128 bits.

La clé est découpée en 8 blocs de 16 bits $k_0$, $k_1$, ....$k_7$.
On considère, comme restes $b_0$, $b_1$ ... $b_7$ des huit éléments initiaux $mwc^0_0$, $mwc^0_1$ ... $mwc^0_7$, les huit blocs $k_0$, $k_1$ ...$k_7$,
comme retenues initiales $c_0$, $c_1$ ... $c_i$ ... $c_7$, les valeurs 1, 2, ... i + 1 .. 8.
Pour initialiser la fifo, on considère, comme premier mot, ici de 16 bits dans le système hexadécimal, le nombre DA37h, soit
1101101000110111, comme deuxième mot, le nombre C07Fh, soit
1100000001111111.
Comme **leader** initial, on considère ici le bloc $k_0$ de la clé.
Avant de procéder au chiffrement proprement dit, comme défini plus haut, on procède à une série d'avances de divergence du chiffreur, en l'espèce au moins 21, comme défini au point 1 ci-dessus. En effet, dans l'exemple considéré, ce n'est qu'après 21 avances des générateurs mwc qu'on peut être sûr d'obtenir à la sortie de la fifo, avec les mêmes probabilités, soit un mot de la fifo soit le terme **cmb** défini ci-dessus. Sinon, et le contenu de la fifo étant accessible, l'un des bits de la clé pourrait être révélé.

5.2.- Initialisation par une clé de 248 bits

La clé de 248 bits est découpée en une partie basse de 128 bits, elle-même découpée en 8 blocs de 16 bits $h_0$, $h_1$ ... $h_7$, et une partie haute, elle-même découpée en 8 blocs de 15 bits $h_8$, $h_9$ ... $h_{15}$.
On considère, comme restes $b_0$, $b_1$ ... $b_7$ des huit éléments initiaux $mwc^0_0$, $mwc^0_1$ ... $mwc^0_7$, les huit blocs $h_0$, $h_1$ ... $h_7$,
comme retenues initiales $c_0$, $c_1$ ... $c_7$, les valeurs $2^{16}$ AND $h_8$, $2^{16}$ AND $h_9$, ... $2^{16}$ AND $h_{15}$.
L'initialisation de la fifo et les avances de divergence s'effectuent comme avec la clé de 128 bits.

O

O O

Avant de présenter une généralisation du chiffreur, abordons le détail de la mise en oeuvre préférée d'une étape d'itération.

. $lea_1 = 0$
newlea est l'élément mwc d'indice

$$4\,lea_3 + 2\,lea_6 + lea_{13}$$

. $lea_1 = 1$
newlea est le complément bit à bit de l'élément mwc d'indice ci-dessus.
Soit l'indice $d = 4lea_7 + 2lea_{11} + lea_5$

. $lea_9 = 0$

. $lea_{12} = 1$
$cmb = \{[c(mwc_d) \oplus c(mwc_{d+1mod8})] + c(mwc_{d+2mod8})\} \oplus c(mwc_{d+3mod8})$ relation dans laquelle

- $c(mwc_d)$ est la retenue de l'élément $mwc_d$,
- $\oplus$ est l'opérateur OU exclusif bit à bit,
- mod8 signifie modulo 8, puisqu'il n'y a que huit éléments mwc initiaux,
- + est l'opérateur arithmétique d'addition modulo $2^{16}$, puisque les termes ont 16 bits.

. $lea12 = 0$
$cmb = \{[c(mwc_d) + c(mwc_{d+1mod8})] \oplus c(mwc_{d+2mod8})\} + c(mwc_{d+3mod8})$

. $lea_9 = 1$

. $lea_{12} = 1$
$cmb = cmb(lea_9 = 0, lea_{12} = 1) + c(mwc_{d+4mod8})$
. $lea_{12} = 0$
$cmb = cmb(lea_9 = 0, lea_{12} = 0) \oplus c(mwc_{d+4mod8})$

. $lea_8 = 1$
la sortie du chiffreur est le premier mot de la fifo.

. $lea_8 = 0$
- la sortie du chiffreur est cmb.

C'est l'élément mwc d'indice

$$4lea_{10} + 2lea_4 + lea_{14}$$

qui est avancé de deux rangs et ce sont les reste et retenue de l'élément mwc d'indice

$$4lea_2 + 2lea_1 + lea_0$$

qui sont modifiés, à la fin d'une itération.

O

O  O

<u>Généralisation du chiffreur</u>

1) On procède dans le système à base $2^p$

. Les données claires à chiffrer pouvant être considérées comme une suite de bits, on les découpe en une suite de blocs de p bits.

- On considère une fonction de chiffrement, d'une pluralité q (dans l'exemple considéré, 8) de paramètres constitués de générateurs mwc et une séquence pseudoaléatoire de valeurs itératives de cette fonction.

. On soumet deux à deux les blocs de la suite de blocs de p bits de données claires et les valeurs de la séquence de valeurs itératives de la fonction de chiffrement à l'opération logique $\oplus$ mais les opérations artihmétiques + et - seraient également envisageables.

On remarquera que, en référence à l'exemple présenté plus haut, même si cmb n'est calculé qu'avec quatre ou cinq générateurs mwc, compte-tenu du choix probabilistique de ces générateurs dans l'ensemble des huit générateurs considérés, cmb reste une fonction de ces huit générateurs.

2.- Si l'opérateur est ⊕, le chiffreur est reversible puisque le déchiffrement s'effectue de la même manière, en soumettant les blocs de données chiffrées au même chiffeur et à la même opération logique ⊕, pour obtenir les données claires.

Si l'opérateur est + ou -, pour obtenir les données claires (respectivement chiffrées), à partir des données chiffrées (respectivement claires), on soumet celles-ci au même chiffreur mais à l'opération inverse - ou +.

3.- Dans la fonction de chiffrement, les générateurs mwc sont respectivement introduits alternativement par l'opération ⊕ et l'opération +.

4.- Dans l'exemple considéré, cmb est une fonction de quatre générateurs mwc pris parmi huit, d'indices constituant une suite pseudoaléatoire de g indices (g <q). A ce titre, et comme déjà souligné ci-dessus, cmb reste toutefois une fonction à huit paramètres, l'indice $d(4lea_7 + 2lea_{11} + lea_5)$ pouvant prendre probabilistiquement l'une quelconque des huit valeurs 0 - 7.

Mais, la suite d'indices des générateurs mwc de la fonction de chiffrement pourrait aussi être une suite déterminée, si on considérait effectivement l'ensemble des huit générateurs mwc.

On remarquera que pour déterminer le premier élément d de la suite d'indices des générateurs mwc de chiffrement, on part de la valeur d'un des générateurs d'une itération précédente et on en extrait une série de bits quelconques qu'on pondère par une série de multiplicateurs dont la somme est égale à 7 (q - 1), pour que la probabilité de prendre l'un quelconque des générateurs mwc soit la même pour tous les huit (q). Dans l'exemple considéré, où q = 8, la série de multiplicateurs 4, 2, 1 est la meilleure pour l'équidistribution.

5.- On a vu qu'au moment de l'avance du chiffreur, à chaque itération, on fait avancer l'un des générateurs mwc différemment des autres, en l'espèce, en le faisant avancer de deux rangs.

Il s'agit alors d'une combinaison non linéaire de générateurs mwc.

6.- Dans l'exemple considéré, on a déterminé la sortie du chiffreur (le premier mot de la fifo ou cmb) en fonction de la valeur de $lea_8$, bit du leader. Il est clair qu'on aurait pu considérer un bit de la valeur d'un autre générateur mwc d'une itération précédente.

7.- La clé d'initialisation sert à l'initialisation des générateurs mwc.

8.- Dans l'exemple considéré, la détermination de cmb dépend des valeurs de $lea_9$ et $lea_{12}$. On aurait pu aussi proposer de la déterminer à partir des valeurs de certains bits de la valeur d'un autre générateur mwc d'une itération précédente.

9.- Dans le système à base $2^{16}$ (p = 16) et en considérant 8 (q = 8) générateurs mwc, on a proposé d'utiliser une clé de 128 bits ou 248 bits. Une clé de 128 bits est donc une clé de qp bits, une clé de 248 bits, une clé de qp+q (p-1) bits.

10.- Chaque bit du leader n'intervient qu'une fois dans chaque itération.

## Revendications

1. Procédé de chiffrement de données claires, dans lequel,

   - dans un système à base $2^p$,
   - on découpe les données en une suite de blocs de p bits,
   - on considère une fonction de chiffrement d'une pluralité q de paramètres constitués de générateurs mwc et on en détermine une séquence pseudoaléatoire de valeurs itératives de p bits et
   - on soumet deux à deux les blocs de données de ladite suite et les valeurs de chiffrement de ladite séquence à l'une des opérations du groupe comprenant l'opération logique ⊕ et les opérations arithmétiques + et -.

2. Procédé selon la revendication 1, dans lequel, dans la fonction de chiffrement, les générateurs mwc sont respectivement introduits alternativement par l'opération ⊕ et l'opération +.

3. Procédé selon l'une des revendications 1 et 2, dans lequel les indices des générateurs mwc de la fonction de chiffrement constituent une suite déterminée de q indices.

4. Procédé selon l'une des revendications 1 et 2, dans lequel les indices des générateurs mwc de la fonction de chiffrement constituent une suite pseudoaléatoire de g indices (g<q).

5. Procédé selon la revendication 4, dans lequel le premier indice de la suite pseudoaléatoire des indices des générateurs mwc de chiffrement est déterminée à partir de la valeur d'un des générateurs mwc d'une itération précédente dont on extrait une série de bits qu'on pondère par une série de multiplicateurs.

**6.** Procédé selon l'une des revendications 1 à 5, dans lequel lesdits générateurs mwc constituent une combinaison non linéaire.

**7.** Procédé selon l'une des revendication 1 à 6, dans lequel, avant de chiffrer les données claires, on procède à une série d'avances de divergence des générateurs mwc.

**8.** Procédé selon l'une des revendications 1 à 7, dans lequel, après avoir déterminé chacune desdites valeurs itératives, on l'écrit dans le deuxième élément d'une mémoire fifo à deux éléments, le mot de ce deuxième élément devenant celui du premier élément, et on soumet à ladite opération, comme sortie du chiffreur, soit le mot du premier élément de la mémoire fifo, soit la valeur itérative déterminée.

**9.** Procédé selon la revendication 8, dans lequel on détermine la sortie du chiffreur en fonction de la valeur d'un des bits de la valeur d'un des générateurs mwc d'une itération précédente.

**10.** Procédé selon l'une des revendication 1 à 9, dans lequel on initialise les générateurs mwc par une clé d'initialisation.

**11.** Procédé selon la revendication 10, dans lequel la clé d'initialisation est une clé de qp bits.

**12.** Procédé selon la revendication 10, dans lequel la clé d'initialisation est une clé de [qp + q(p-1)] bits.

**13.** Procédé selon l'une des revendications 1 à 12, dans lequel, à la fin d'une itération, l'un des générateurs mwc, avant qu'il ne soit avancé, est modifié dans son reste et sa retenue.

**14.** Procédé selon l'une des revendications 1 à 13, dans lequel chaque valeur itérative de ladite fonction de chiffrement dépend des valeurs de certains bits de la valeur d'un des générateurs mwc d'une itération précédente.

**15.** Procédé selon l'une des revendications 1 à 14, dans lequel p = 16.

**16.** Procédé selon l'une des revendications 1 à 15, dans lequel q = 8.

**17.** Procédé selon les revendications 5 et 16, dans lequel on considère, pour ladite série de multiplicateurs, la série 4, 2, 1.

EP 0 915 589 A1

Office européen **RAPPORT DE RECHERCHE EUROPEENNE** Numéro de la demande

des brevets EP 98 40 1111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | CHABANNE H ET AL: "JEROBOAM stream cipher" FAST SOFTWARE ENCRYPTION. 5TH INTERNATIONAL WORKSHOP, FSE'98 PROCEEDINGS, FAST SOFTWARE ENCRYPTION 5TH INTERNATIONAL WORKSHOP, FSE '98 PROCEEDINGS, PARIS, FRANCE, 23-25 MARCH 1998, pages 49-59, XP002082407 ISBN 3-540-64265-X, 1998, Berlin, Germany, Springer-Verlag, Germany * page 49, ligne 1 - ligne 10 * * page 53, ligne 17 - page 54, ligne 23 * | 1,6,15, 16 | H04L9/22 |

| | | | DOMAINES TECHNIQUES RECHERCHES (Int.Cl.6) |
|---|---|---|---|
| | | | H04L |

Le présent rapport a été établi pour toutes les revendications

| Lieu de la recherche | Date d'achèvement de la recherche | Examinateur |
|---|---|---|
| LA HAYE | 28 octobre 1998 | Holper, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

9